# EUROPEAN PATENT APPLICATION

(11) **EP 4 752 285 A1**
(43) Date of publication of application: **03.06.2026**
(21) Application number: 23941360.2
(22) Date of filing: 01.12.2023
(51) Int. Cl.: E01H 5/04, B60L 53/12, H02J 7/00, H02J 50/12

(54) **SELF-WALKING DEVICE, OPERATIONAL ROBOT, AND CHARGING SYSTEM**

(30) Priority: 16.06.2023 CN 202310725079; 08.08.2023 CN 202322118614 U
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHU, Taotao, Shenzhen, Guangdong 518000 (CN); SONG, Yongqi, Shenzhen, Guangdong 518000 (CN); CHEN, Weiyue, Shenzhen, Guangdong 518000 (CN)
(74) Representative: Abel & Imray LLP
(86) International application number: PCT/CN2023/135923
(87) International publication number: WO 2024/255139

(57) **Abstract**

The present application discloses a self-propelled device, a working robot, and a charging system. The self-propelled device is applicable to being charged via a charging pile, and the self-propelled device includes a vehicle body, a mobility mechanism, a storage battery, and a charging module. The mobility mechanism is disposed at a bottom of the vehicle body and configured to drive the vehicle body to conduct a moving operation. The storage battery is mounted on the vehicle body. The charging module is configured to be coupled to the charging pile so as to receive electric energy of the charging pile to charge the storage battery, and the charging module is disposed at the bottom of the vehicle body. Thus, the working robot and the charging pile adopt a bottom-to-top charging structure, and the entire vehicle body may play a shielding role for the charging module disposed at the bottom of the vehicle body. When the working robot works outdoors on a snowy day, the vehicle body can prevent snow from falling to a surface of the charging module, so that the problem of difficult charging caused by snow accumulation or agglomeration on the surface of the charging module is solved, which ensures that the working robot can finish a charging task smoothly.

## Description

### CROSS-REFERENCE TO RELATED APPLICATIONS

This application claims priority to the Chinese patent application No. CN202310725079.3 filed on June 16, 2023 to the CNIPA, and entitled "SNOW CLEANING ROBOT AND SNOW CLEANING SYSTEM", the entire content of which is incorporated herein by reference.

This application claims priority to the Chinese patent application No. CN202322118614.7 filed on August 8, 2023 to the CNIPA, and entitled "MOBILE ROBOT WITH WIRELESS CHARGING FUNCTION", the entire content of which is incorporated herein by reference.

### TECHNICAL FIELD

The present application relates to the technical field of robots, in particular to a self-propelled device, a working robot, and a charging system.

### BACKGROUND

With the rapid development of robotics technology, household robots (e.g., snow cleaning robots) have begun to enter every corner of daily life. A snow cleaning robot includes a snow cleaning apparatus and a carrier for dragging the snow cleaning apparatus to move in a courtyard. The carrier is usually a wheeled or crawler-type vehicle body, and the snow cleaning apparatus mainly includes a snow rolling mechanism and a snow throwing mechanism. The snow rolling mechanism gathers accumulated snow on the ground into a snow rolling cabin, and then the snow throwing mechanism throws the accumulated snow in the snow rolling cabin in a specified direction.

In pursuit of the concept of low carbon, environmental protection, energy conservation and emission reduction, traditional snow cleaning robots powered by fuel oil are being gradually phased out. The mainstream development direction of existing snow cleaning robots is to adopt an electric structure powered by a storage battery. An existing charging module is mainly disposed on a side face of the vehicle body of the snow cleaning robot. The charging module on the side face of the vehicle body is brought close to a charging pile by the movement of the snow cleaning robot, so as to realize electrical connection with the charging pile.

Since the snow cleaning robot usually performs snow clearing work while it is snowing, the vehicle body of the snow cleaning robot is highly susceptible to snow cover or the formation of hard snow blocks on its surface, which brings great difficulties to the charging of the snow cleaning robot.

### SUMMARY

Embodiments of the present application provide a self-propelled device, a working robot, and a charging system.

According to a first aspect of the present application, an embodiment of the present application provides a self-propelled device. The self-propelled device is applicable to being charged via a charging pile. The self-propelled device includes a vehicle body, a mobility mechanism, a storage battery, and a charging module. The mobility mechanism is disposed at a bottom of the vehicle body and configured to drive the vehicle body to conduct a moving operation. The storage battery is mounted on the vehicle body. The charging module is configured to be coupled to the charging pile so as to receive electric energy of the charging pile to charge the storage battery, and the charging module is disposed at the bottom of the vehicle body.

According to a second aspect of the present application, an embodiment of the present application further provides a working robot. The working robot includes a working apparatus and the above self-propelled device, and the working apparatus is connected to a vehicle body of the self-propelled device.

According to a third aspect of the present application, an embodiment of the present application further provides a charging system. The charging system includes the above working robot and a charging pile. The charging pile includes a base plate and a power module, and the power module is disposed on the base plate and adapts to a charging module of the working robot. The base plate is configured for parking of the working robot, and when the working robot is parked on the base plate for charging, the power module is located under the charging module.

### BRIEF DESCRIPTION OF THE DRAWINGS

In order to explain technical solutions in embodiments of the present application more clearly, the following will briefly introduce the accompanying drawings that need to be used in the descriptions of the embodiments. Apparently, the accompanying drawings in the following descriptions are only some embodiments of the present application, and for a person skilled in the art, on the premise of no creative labor, other accompanying drawings can further be obtained from these accompanying drawings.
FIG. 1 is a schematic structural diagram of a charging system provided by an embodiment of the present application.
FIG. 2 is a schematic structural diagram of a charging pile in the charging system shown in FIG. 1.
FIG. 3 is a schematic structural diagram of a working apparatus in the charging system shown in FIG. 1.
FIG. 4 is a schematic structural diagram of a self-propelled device in the charging system shown in FIG. 1.
FIG. 5 is a schematic sectional view of the self-propelled device shown in FIG. 4.
FIG. 6 is a schematic exploded view of a charging module in the self-propelled device shown in FIG. 4.
FIG. 7 is a schematic structural diagram of a charging module in a mounted state in the self-propelled device shown in FIG. 4.
FIG. 8 is a schematic structural diagram of a charging module in a detached state in the self-propelled device shown in FIG. 4.
FIG. 9 is a schematic structural diagram of a vehicle body, a charging module and a latch assembly in the self-propelled device shown in FIG. 4.
FIG. 10 is a schematic exploded view of the latch assembly shown in FIG. 9.
FIG. 11 is a schematic sectional view of the latch assembly shown in FIG. 9.

Reference numerals: 10, charging system; 20, charging pile; 210, base plate; 230, power module; 2320, transmitting coil; 30, working robot; 320, working apparatus; 3200, snow cleaning apparatus; 3201, housing body; 3210, snow rolling mechanism; 3212, snow rolling cabin; 3214, snow rolling blade; 3216, snow rolling output shaft; 3230, snow throwing mechanism; 3232, snow throwing cabin; 340, self-propelled device; 3410, vehicle body; 3412, bottom surface; 3414, accommodating chamber; 3416, inner wall; 3418, latching hole; 3420, mobility mechanism; 3421, crawler belt; 3430, storage battery; 3490, baffle mechanism; 3492, baffle; 3460, actuator; 3440, charging module; 3441, receiving coil; 3443, coil positioning sensor; 3445, inductor; 3447, charging circuit board; 2340, marking coil; 3470, control module; 3450, housing; 3451, charging surface; 3454, upper housing; 3455, lower housing; 3456, sealing member; 3480, limiting mechanism; 3481, first limiting portion; 3482, second limiting portion; 3483, limiting boss; 3484, limiting groove; 3500, latch assembly; 3510, shell; 3512, base; 3514, hood; 3516, through hole; 3520, bolt; 3521, latching portion; 3530, elastic member; 3532, spring; 3540, guide pillar; 3518, guide platform; 3523, guide groove; 3453, fixing platform; 3550, lug; 3552, penetrating hole; 3560, fastening member; and 3234, snow throwing bucket.

### DETAILED DESCRIPTION

In order to make a person skilled in the art better understand the solutions of the present application, the following clearly and completely describes the technical solutions in embodiments of the present application with reference to the accompanying drawings in the embodiments of the present application. Apparently, the described embodiments are only part of the embodiments of the present application, not all of the embodiments. Based on the embodiments in the present application, all other embodiments obtained by a person skilled in the art without creative effort fall within the scope of protection of the present application.

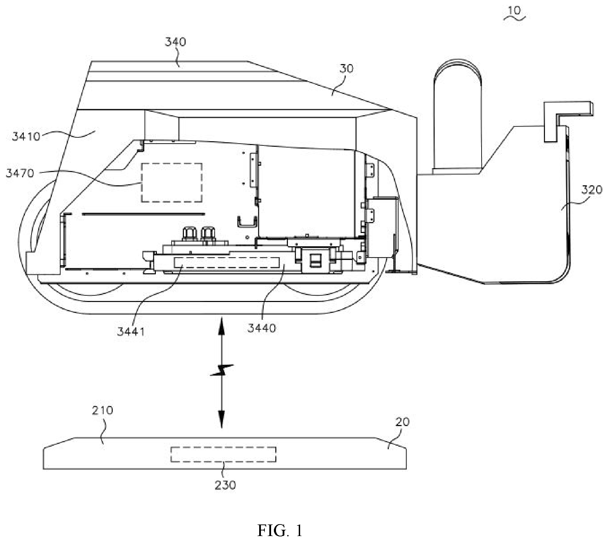

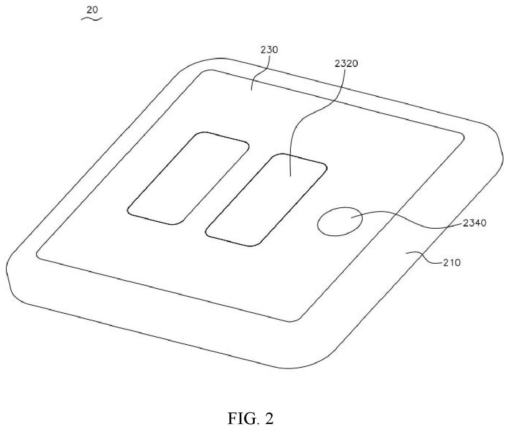

Referring to FIG. 1 and FIG. 2, this embodiment discloses a charging system 10. The charging system 10 may include a charging pile 20 and a working robot 30. The working robot 30 is applicable to being electrically connected to the charging pile 20, so that the charging pile 20 charges the working robot 30.

In this embodiment, the charging pile 20 may include a base plate 210 and a power module 230. The base plate 210 is configured for parking of the working robot 30. The power module 230 is disposed on the base plate 210, and the base plate 210 may further play fixing and protecting roles for the power module 230. Specifically, the power module 230 adapts to a charging module 3440 of the working robot 30. For example, the power module 230 may include a transmitting coil 2320, the charging module 3440 may include a receiving coil 3441 coupled to the transmitting coil 2320, and the receiving coil 3441 can receive electromagnetic waves emitted by the transmitting coil 2320 to achieve wireless charging between the charging pile 20 and the working robot 30. For another example, the power module 230 may include a plug (e.g., a plug with pins), the charging module 3440 may include a socket adapting to the plug. For instance, the socket may be a conductive disk. In a case where the plug abuts against the conductive disk through the pins, wired charging between the charging pile 20 and the working robot 30 can be achieved.

In some possible embodiments, in a case where the power module 230 includes the transmitting coil 2320, the power module 230 may further include a frequency converter (not shown). The transmitting coil 2320 is connected to a power source input into the charging pile 20 through the frequency converter, and a frequency of an input voltage is adjusted through the frequency converter. If the input voltage is an alternating current, a frequency of the alternating voltage is adjusted through the frequency converter, so that charging efficiency of the working robot 30 is controlled. If the input voltage is a direct current, the power module 230 further includes an oscillating circuit (not shown) which is used to filter the input direct current so as to form a pulsating direct current. The charging efficiency of the working robot 30 is controlled by changing a frequency of the pulsating direct current through the frequency converter. Specifically, the frequency converter may include a rectifier unit, a filter unit, an inverter unit, a braking unit, a microprocessing unit, and the like. The oscillating circuit may be an LC oscillating circuit, and the specific implementations of the frequency converter and the oscillating circuit are not limited in this embodiment.

In this embodiment, the working robot 30 may include a working apparatus 320 and a self-propelled device 340. The working apparatus 320 is connected to a vehicle body 3410 of the self-propelled device 340, and the working apparatus 320 is configured to achieve different functions corresponding to the working robot 30. For example, in a case where the working robot 30 is a snow cleaning robot, the working apparatus 320 may be a snow removing mechanism, a snow pushing mechanism and the like. For another example, in a case where the working robot 30 is a weeding robot, the working apparatus 320 may be a weeding mechanism, a mowing mechanism and the like. Specifically, the working apparatus 320 may be a snow removing mechanism, a snow rolling mechanism, a snow throwing mechanism, a weeding mechanism, a mowing mechanism, a leaf blowing mechanism, a salt spreading mechanism, a roller brush mechanism, a snow pushing mechanism and the like, and the specific implementation of the working apparatus 320 is not limited in this embodiment. The self-propelled device 340 is configured to drag the working apparatus 320 to work. The self-propelled device 340 is provided with the above charging module 3440, so that the self-propelled device 340 is applicable to being charged through the charging pile 20.

In some possible embodiments, the working apparatus 320 may be a snow cleaning apparatus 3200. The snow cleaning apparatus 3200 is configured to remove accumulated snow on road surfaces. The snow cleaning apparatus 3200 in this embodiment may include a snow rolling mechanism 3210 and a snow throwing mechanism 3230. The snow rolling mechanism 3210 is provided with a snow rolling cabin 3212 which is internally provided with snow rolling blades 3214 for gathering the accumulated snow. The snow throwing mechanism 3230 is provided with a snow throwing cabin 3232 communicating with the snow rolling cabin 3212. The snow throwing cabin 3232 is internally provided with snow throwing blades (not shown) for throwing out the accumulated snow in the snow rolling cabin 3212. The snow throwing cabin 3232 is located on a central axis of the snow rolling cabin 3212, the snow rolling blades 3214 are fixed onto a snow rolling output shaft 3216, and two groups of snow rolling blades 3214 are symmetrically disposed with respect to the central axis of the snow rolling cabin 3212. A spiral direction of each group of snow rolling blades 3214 faces the central axis of the snow rolling cabin 3212. Therefore, when the snow rolling output shaft 3216 rotates, the two groups of snow rolling blades 3214 are driven to gather the accumulated snow in the snow rolling cabin 3212 to a center of the snow rolling cabin 3212 simultaneously. With continuous advancing of the working robot 30, the accumulated snow gathered at the center of the snow rolling cabin 3212 is pushed deeper into the snow rolling cabin 3212 by continuously incoming new accumulated snow, that is, the accumulated snow is pushed towards the snow throwing cabin 3232 communicating with the snow rolling cabin 3212, and the accumulated snow is thrown out along a snow throwing bucket 3234 by acting of the snow throwing blades.

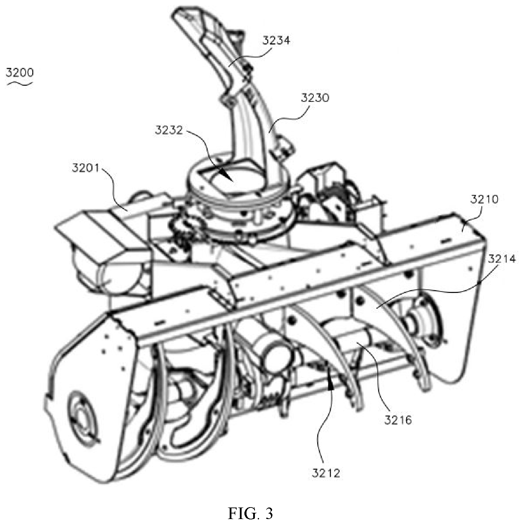

Specifically, in the embodiment shown in FIG. 3, the snow rolling cabin 3212 is of a semi-enclosed structure, a portion thereof facing forwards is provided with an opening, and in this way, when the working robot 30 travels, the snow rolling cabin 3212 scoops up the oncoming accumulated snow into itself. The snow throwing cabin 3232 is disposed on one side of the snow rolling cabin 3212 facing away from the opening, the snow throwing bucket 3234 communicating with the snow throwing cabin 3232 is disposed outside the snow cleaning apparatus 3200, an inside of the snow rolling cabin 3212 is a curved inner cavity, and a section of the inner cavity is gradually reduced from the opening to the snow throwing cabin 3232. As such, the snow rolling blades 3214 are used to gather the accumulated snow in the snow rolling cabin 3212, with the advancing of the working robot 30, the accumulated snow gathered in the snow rolling cabin 3212 is collected by a cabin wall of the snow rolling cabin 3212 with the gradually reducing section and propelled towards the snow throwing cabin 3232, and then the accumulated snow is thrown out by the snow throwing bucket 3234 via the snow throwing blades in the snow throwing cabin 3232.

In some possible embodiments, the snow cleaning apparatus 3200 may further include an actuator (not shown) for driving the snow rolling blades 3214 and the snow throwing blades to operate. For example, the actuator may be a motor. The motor is powered by a storage battery 3430 disposed in the self-propelled device 340. In this way, compared to a traditional snow cleaning robot powered by fuel oil, a drive system in the working robot 30 disclosed in this embodiment may have the smaller size, realizing miniaturized design of the working robot 30.

Further, a root of the snow throwing bucket 3234 is fixedly connected to a housing body 3201 of the snow cleaning apparatus 3200, the snow throwing bucket 3234 is in an arc shape, and an end thereof extends in a vertical direction and is gradually curved to a horizontal direction at the same time. In order to achieve the maximum snow throwing lift with limited energy consumption, in this embodiment, a central angle of a center line of the snow throwing bucket 3234 is 45°, that is, a direction of the accumulated snow's velocity at the moment it exits a snow throwing opening forms a 45° angle with the horizontal direction. Since accumulated snow of the same mass achieves the maximum throwing distance in the horizontal direction when thrown out at an angle of 45° upward and obliquely with the same initial velocity, such structural design enables the maximum snow throwing lift to be obtained on the premise of unchanged energy consumption (i.e., the initial velocity of the accumulated snow when exiting the snow throwing opening remains unchanged), and the accumulated snow is thrown farther, thereby improving the snow throwing efficiency of the working robot 30, and reducing the energy consumption of the working robot 30.

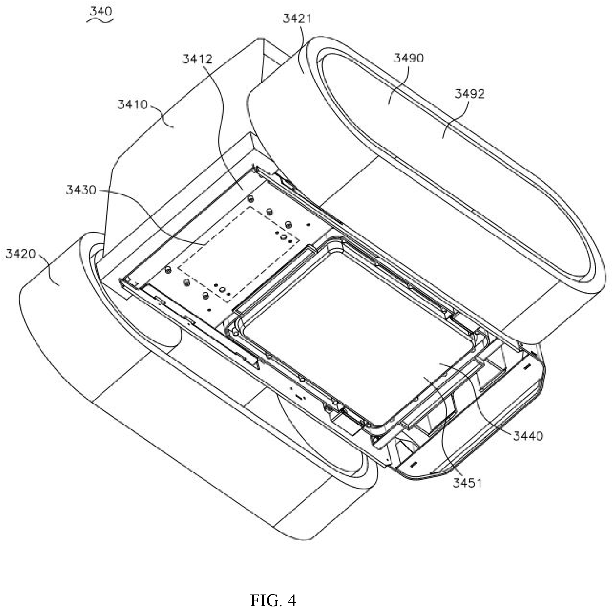

Referring to FIG. 4, the self-propelled device 340 may include the vehicle body 3410, a mobility mechanism 3420, the storage battery 3430, and the charging module 3440. The mobility mechanism 3420 is disposed at a bottom of the vehicle body 3410 and configured to drive the vehicle body 3410 to conduct a moving operation. The storage battery 3430 is mounted on the vehicle body 3410. The charging module 3440 is configured to be coupled to the charging pile 20 so as to receive electric energy of the charging pile 20 to charge the storage battery 3430, and the charging module 3440 is disposed at the bottom of the vehicle body 3410.

Since the charging module 3440 is disposed at the bottom of the vehicle body 3410, when the working robot 30 is parked on the base plate 210 of the charging pile 20 for charging, the power module 230 is located under the charging module 3440. Thus, the present application adopts a bottom-to-top charging structure of the power module 230 and the charging module 3440, and the entire vehicle body 3410 may play a shielding role for the charging module 3440 disposed at the bottom of the vehicle body 3410. When the working robot 30 works outdoors on a snowy day, the vehicle body 3410 can prevent snow from falling to a surface of the charging module 3440, so that the problem of difficult charging caused by snow accumulation or agglomeration on the surface of the charging module 3440 is solved, which ensures that the working robot 30 can finish a charging task smoothly.

In the following, the structure of the self-propelled device 340 is introduced in detail.

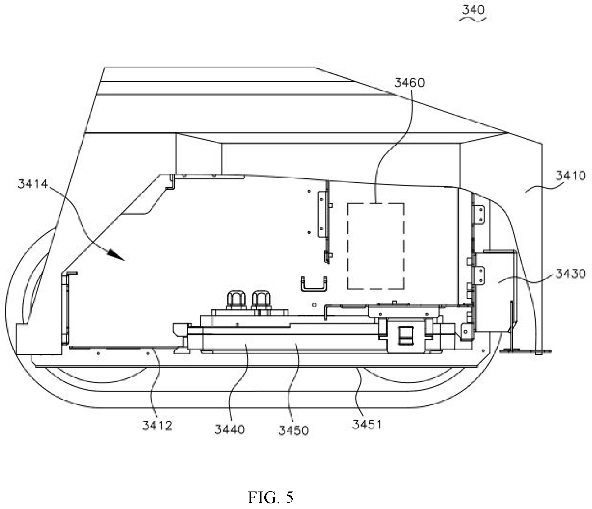

In this embodiment, the vehicle body 3410 is configured to play fixing and supporting roles for the storage battery 3430 and the charging module 3440. Referring to FIG. 5, the vehicle body 3410 may be provided with an accommodating chamber 3414, the accommodating chamber 3414 is approximately located at the bottom of the vehicle body 3410, and the storage battery 3430 and the charging module 3440 may be disposed in the accommodating chamber 3414 to play a protecting role for the storage battery 3430 and the charging module 3440.

In this embodiment, the storage battery 3430 is mounted on the vehicle body 3410. In one aspect, the storage battery 3430 is electrically connected to the mobility mechanism 3420, and configured to provide electric energy required for walking of the self-propelled device 340. In another aspect, the storage battery 3430 is further electrically connected to the working apparatus 320, and configured to provide electric energy required for driving the working apparatus 320 to work. Specifically, the storage battery 3430 may be a lead-acid storage battery, a nickel-metal hydride storage battery, a lithium-ion battery, and the like, which is not specifically limited in this embodiment.

In this embodiment, the mobility mechanism 3420 is disposed at the bottom of the vehicle body 3410 and configured to drive the vehicle body 3410 to conduct a moving operation. Specifically, the mobility mechanism 3420 is disposed at the bottom of the vehicle body 3410 and supports the vehicle body 3410 to enable the bottom of the vehicle body 3410 to be spaced from a platform surface in a walking scenario, and the charging module 3440 is exposed at the bottom of the vehicle body 3410. Therefore, when the working robot 30 travels to a position above the charging pile 20, the charging module 3440 located at the bottom of the vehicle body 3410 may keep a certain space from the charging pile 20, so as to avoid collision of the charging module 3440 and the charging pile 20.

In some possible embodiments, referring to FIG. 4 again, the mobility mechanism 3420 may include two crawler belts 3421, the two crawler belts 3421 are located on left and right sides in a traveling direction of the vehicle body 3410, and the charging module 3440 is exposed in a space between the two crawler belts 3421. Therefore, in the traveling process of the vehicle body 3410, the two crawler belts 3421 located on the two sides of the vehicle body 3410 may avoid accumulated snow from coming to the vehicle bottom from the left and right sides of the vehicle body 3410 to a certain extent, so that contact of the accumulated snow from the ground with the charging module 3440 is avoided, the probability that the surface of the charging module 3440 is covered by snow blocks or ice blocks due to the accumulated snow on the ground is lowered, and it is guaranteed that the self-propelled device 340 can be charged smoothly. In some other possible embodiments, the mobility mechanism 3420 may include a plurality of driving wheels, and the plurality of driving wheels may be disposed at the bottom of the vehicle body 3410 to drive the vehicle body 3410 to conduct a moving operation. An implementation of the mobility mechanism 3420 is not specifically limited in this embodiment.

In some possible embodiments, the self-propelled device 340 further includes a baffle mechanism 3490, the baffle mechanism 3490 includes two baffles 3492, and the two baffles 3492 are disposed on side faces of the two crawler belts 3421 respectively and shield the space between the two crawler belts 3421. Therefore, when the vehicle body 3410 travels in snow, the two baffles 3492 and the two crawler belts 3421 can further block the accumulated snow on the ground from coming to the vehicle bottom from the bottoms of the two sides of the vehicle body 3410. In addition, the working apparatus 320 located on the front portion of the vehicle body 3410 may also block the accumulated snow on the ground from coming to the vehicle bottom from the front portion of the vehicle body 3410, such that the baffles 3492, the crawler belts 3421 and the working apparatus 320 form a three-face enclosing structure for the bottom of the vehicle body 3410. Even though the self-propelled device 340 proceeds through a snowfield with a certain thickness, the accumulated snow cannot come to the vehicle bottom from the two sides and the front portion of the vehicle body 3410, so that contact of the accumulated snow from the ground with the charging module 3440 is avoided, the probability that the surface of the charging module 3440 is covered by snow blocks or ice blocks due to the accumulated snow on the ground is lowered, and it is guaranteed that the self-propelled device 340 can be charged smoothly.

Further, when encountering with snowstorm weathers, as the baffles 3492, the crawler belts 3421 and the working apparatus 320 may completely cover the two sides and the front portion of the bottom of the vehicle body 3410, snow lifted by wind is difficult to enter the vehicle bottom. In this way, accumulated snow from the sky and the ground cannot make contact with the charging module 3440, which is beneficial for realizing automatic charging of the self-propelled device 340.

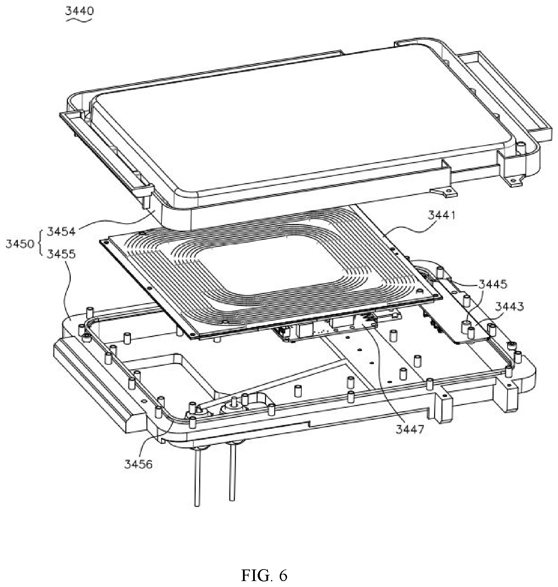

In this embodiment, the charging module 3440 is configured to be coupled to the charging pile 20 so as to receive electric energy of the charging pile 20 to charge the storage battery 3430. Referring to FIG. 6, the charging module 3440 may include a housing 3450 and the receiving coil 3441. The housing 3450 is mounted at the bottom of the vehicle body 3410, the receiving coil 3441 is configured to be coupled to the transmitting coil 2320 located on the charging pile 20, and the receiving coil 3441 is disposed in the housing 3450 and electrically connected to the storage battery 3430.

Therefore, in this embodiment, the charging pile 20 and the working robot 30 adopt a wireless charging manner for charging. Compared to traditional wired connections, such as a contact connection between the pins and the conductive disk, the wireless charging manner can avoid the problems such as poor contact of electric contact members (e.g., plugs, and sockets) caused by rusting, dust, dirt and abrasion. In addition, compared to direct plug-in charging, as no plug is used, manual intervention is not needed. The working robot 30 can be wirelessly charged just by traveling to a position corresponding to the charging pile 20, the step of manual plugging of a charging plug is omitted, and the charging process can be automated.

In some possible embodiments, the charging module 3440 may further include a charging circuit board 3447, and the receiving coil 3441 is electrically connected to the storage battery 3430 through the charging circuit board 3447. Specifically, the charging circuit board 3447 may be integrated with a rectifying circuit, a filter circuit, a voltage stabilizing circuit and other circuit structures, such that the receiving coil 3441 charges the storage battery 3430 by supplying an induced voltage through the charging circuit board 3447 after rectification, filtering and voltage stabilization, so as to ensure a smooth charging process.

In this embodiment, the housing 3450 can provide a good airtight space to protect internal elements and components, so as to prevent the internal elements and components (e.g., the receiving coil 3441) from being eroded by external environments such as rain and snow, wind-blown sand and tidal air. Specifically, the housing 3450 may include an upper housing 3454 and a lower housing 3455 connected with each other. The upper housing 3454 and the lower housing 3455 are buckled together to form an airtight space for accommodating the receiving coil 3441 and the charging circuit board 3447.

Since the receiving coil 3441 and the charging circuit board 3447 inside the charging module 3440 are prone to generating heat, the charging module 3440 needs good heat dissipation. To solve the above problem, one of the upper housing 3454 and the lower housing 3455 includes a plastic material, and the other one includes a metal material.

The housing of the metal material has high heat conductivity, and can rapidly dissipate heat inside the charging module 3440. The housing of the plastic material can avoid blocking by metal during the reception of a magnetic field of the charging module 3440, so that the receiving coil 3441 can work normally. In this embodiment, the housing 3450 adopts a combined form of metal and plastic, while a good receiving capability is achieved, heat dissipation is also considered, so that the elements and components inside the housing can work in a stable environment, and the service lives of the internal elements and components are prolonged.

Specifically, the upper housing 3454 is located on one side of the housing 3450 facing the charging pile 20, and the upper housing 3454 is of a plastic material (e.g., a thermoplastic material, a thermosetting material, etc.). The lower housing 3455 is located on one side of the housing 3450 away from the charging pile 20, and the lower housing 3455 is of a metal material (e.g., alloy, stainless steel, etc.). Therefore, when the working robot 30 is charged, the upper housing 3454 is located between the charging pile 20 and the receiving coil 3441, eliminating the problem that a magnetic field produced by the receiving coil 3441 is blocked by the upper housing 3454 of the plastic material. The lower housing 3455 is located on the side of the receiving coil 3441 facing away from the charging pile 20, such that heat produced by the receiving coil 3441 due to electromagnetic induction is dissipated rapidly, ensuring smooth working of the charging module 3440.

In some possible embodiments, the housing 3450 may further include a sealing member 3456, and the upper housing 3454 and the lower housing 3455 are sealed by the sealing member 3456. The sealing member 3456 can improve the good sealed effect of the housing 3450 to avoid entry of rain and snow, wind-blown sand, tidal air and the like into the housing 3450, further ensuring the stability of the working environment of the elements and components inside the housing 3450. Specifically, the sealing member 3456 may be a sealing ring or a sealing strip.

In some possible embodiments, the charging module 3440 may further include a coil positioning sensor 3443, and the coil positioning sensor 3443 is disposed in the housing 3450 and configured to detect a position of the charging module 3440 relative to the charging pile 20. In this embodiment, the coil positioning sensor 3443 is used to detect a magnetic field change of the charging pile 20, so as to determine a distance and angle of the charging module 3440 relative to the charging pile 20, and thus whether the working robot 30 enters a charging region is recognized, and then whether the receiving coil 3441 of the working robot 30 is turned on or off is determined.

In this embodiment, by disposing the coil positioning sensor 3443, the charging module 3440 can solve the problems that the charging module 3440 is prone to misalignment during use, resulting in low charging efficiency and even no-load charging. Further, in this embodiment, the charging module 3440 integrates a positioning function and a wireless charging receiving function, and has the advantages such as high integration, compact structure and convenient mounting.

Specifically, referring to FIG. 2 and FIG. 6 respectively, the charging pile 20 may further include a marking coil 2340, and the coil positioning sensor 3443 may include a pair of inductors 3445 (e.g., a coil inductor, a plug-in inductor, etc.). The pair of inductors 3445 is configured to detect a magnetic field intensity of the marking coil 2340 to determine a position of the charging module 3440 relative to the charging pile 20. It is not difficult to understand here that, the marking coil 2340 in the charging pile 20 is normally open to form a marking magnetic field at the position where the charging pile 20 is located. In this embodiment, by a numeric value difference of the marking magnetic field acquired by the pair of inductors 3445, the distance and angle of the charging module 3440 relative to the charging pile 20 can be determined. If it is recognized that the working robot 30 has traveled to a region above the charging pile 20, the transmitting coil 2320 of the charging pile 20 and the receiving coil 3441 of the working robot 30 are turned on to achieve wireless charging of the working robot 30. In some other possible embodiments, the coil positioning sensor 3443 may further be an LC resonance circuit composed of an inductor and a capacitor.

In some possible embodiments, the self-propelled device 340 may further include a control module 3470. The control module 3470 is mounted in the accommodating chamber 3414, and configured to control a motion state of the working robot 30 and control the working robot 30 to move. Specifically, the control module 3470 may be a controller, such as a microcontroller unit (MCU). In some possible embodiments, a signal amplifying circuit (not shown) may further be disposed in the control module 3470, and the signal amplifying circuit is configured to amplify a received signal (e.g., an electromagnetic wave) to facilitate subsequent signal processing.

In this embodiment, the control module 3470 is electrically connected to the coil positioning sensor 3443, and configured to acquire an electromagnetic wave received by the coil positioning sensor 3443, process the received electromagnetic wave to obtain electromagnetic wave intensity distribution information, and determine the position of the charging module 3440 relative to the charging pile 20 according to the electromagnetic wave intensity distribution information. The electromagnetic wave intensity distribution information may be electromagnetic wave intensity information at the current position of the working robot 30 and electromagnetic wave range distribution information.

In some possible embodiments, the control module 3470 may determine a position offset of the working robot 30 based on the determined position of the charging module 3440 relative to the charging pile 20 and a current motion state of the working robot 30, and correct the motion state of the working robot 30 based on the position offset, so that the working robot 30 can smoothly move to the position where the charging pile 20 is located. Therefore, the problem that the working robot 30 cannot position the charging pile 20 accurately when needing charging is effectively avoided, and the charging efficiency of the working robot 30 is effectively improved.

In the following, a connection method between the housing 3450 and the vehicle body 3410 is illustrated.

In some possible embodiments, the housing 3450 may be fixedly connected to the bottom of the vehicle body 3410. Referring to FIG. 4 again, the housing 3450 may be provided with a charging surface 3451 corresponding to the transmitting coil 2320. The charging surface 3451 protrudes relative to a bottom surface 3412 of the vehicle body 3410, such that when the working robot 30 travels to the position above the charging pile 20, the charging surface 3451 may be closer to an upper surface of the charging pile 20, so that electromagnetic coupling efficiency of the transmitting coil 2320 in the charging pile 20 is improved, and the charging efficiency of the working robot 30 is improved. Specifically, the "charging surface 3451" here may be a surface of the housing 3450 facing the charging pile 20. As an implementation, part of structures (e.g., one of the upper housing 3454 or the lower housing 3455) in the housing 3450 and the vehicle body 3410 may be of an integrally formed structure, so that the connection reliability between the vehicle body 3410 and the charging module 3440 is improved.

In some other possible embodiments, the self-propelled device 340 may further include an actuator 3460, and the actuator 3460 is disposed in the accommodating chamber 3414 and is in transmission connection with the housing 3450. The actuator 3460 is configured to drive the housing 3450 to move in the accommodating chamber 3414 so as to achieve switching between an extending position and a retracting position. Specifically, the actuator 3460 may be a linear actuator (e.g., a linear motor, a cylinder, etc.), and the linear actuator may directly drive the housing 3450 to go up and down in a designated direction. The designated direction refers to a direction perpendicular to a plane where the bottom surface 3412 of the vehicle body 3410 is located.

Specifically, the housing 3450 is provided with the charging surface 3451 corresponding to the transmitting coil 2320. When the charging module 3440 is located at the extending position, the charging surface 3451 protrudes relative to the bottom surface 3412 of the vehicle body 3410 or is flush with the bottom surface 3412 of the vehicle body 3410; and when the charging module 3440 is located at the retracting position, the charging surface 3451 is concealed in the accommodating chamber 3414. When the charging module 3440 is located at the extending position, the charging module 3440 is in a non-charging state, and at the moment, the charging surface 3451 extends out of the accommodating chamber 3414. When the charging module 3440 is located at the retracting position, the charging module 3440 is in a charging state, and at the moment, the charging surface 3451 retracts back into the accommodating chamber 3414.

By adopting such mechanism design, the housing 3450 in the non-charging state is located at the extending position, and when agglomerates (frost blocks, snow blocks or ice blocks) form on the surface of the charging surface 3451, since the housing 3450 in the charging state will retract upwards into the accommodating chamber 3414, the agglomerates (e.g., frost blocks, snow blocks, ice blocks, etc.) on the surface of the charging surface 3451 will be subjected to normal stress caused by the blocking of a chassis of the vehicle body 3410, so that they are squeezed against each other, broken and separated from the housing 3450. This ensures that no impurities such as agglomerates exist between the charging surface 3451 and the charging pile 20 when the working robot 30 travels to the position above the charging pile 20, thereby guaranteeing smooth wireless charging of the working robot 30 and achieving intelligent operation of the working robot 30. That is, the working robot 30 has the capability of automatic charging in a low-power state, so as to realize automated working to the greatest extent and eliminate the need for manual charging operations for the working robot 30.

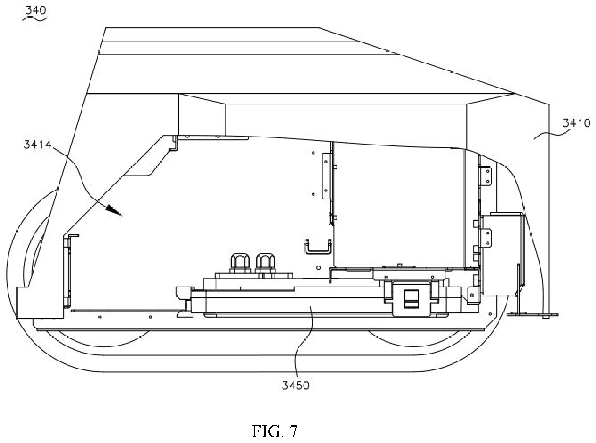

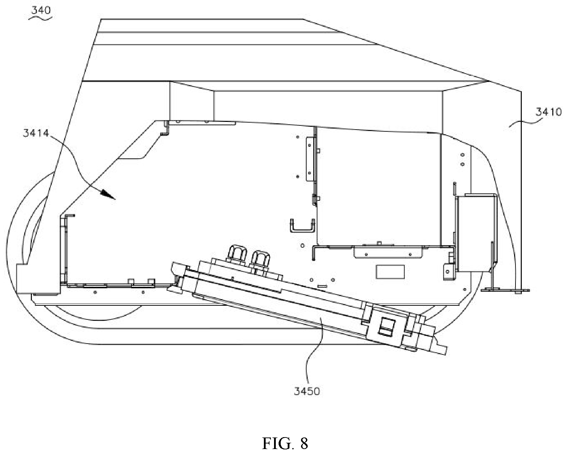

In yet some possible embodiments, the housing 3450 is detachably disposed in the accommodating chamber 3414. Referring to FIG. 7 and FIG. 8 respectively, in FIG. 7, the housing 3450 is in a mounted state, and in FIG. 8, the housing 3450 is in a detached state. In this embodiment, the self-propelled device 340 may further include a limiting mechanism 3480. The limiting mechanism 3480 is connected between the housing 3450 and the vehicle body 3410, so that the housing 3450 is detachably connected to the vehicle body 3410. Therefore, during abnormal charging of the working robot 30, a user or a serviceman may quickly detach the charging module 3440 from the vehicle body 3410, improving the convenience of checking and repairing.

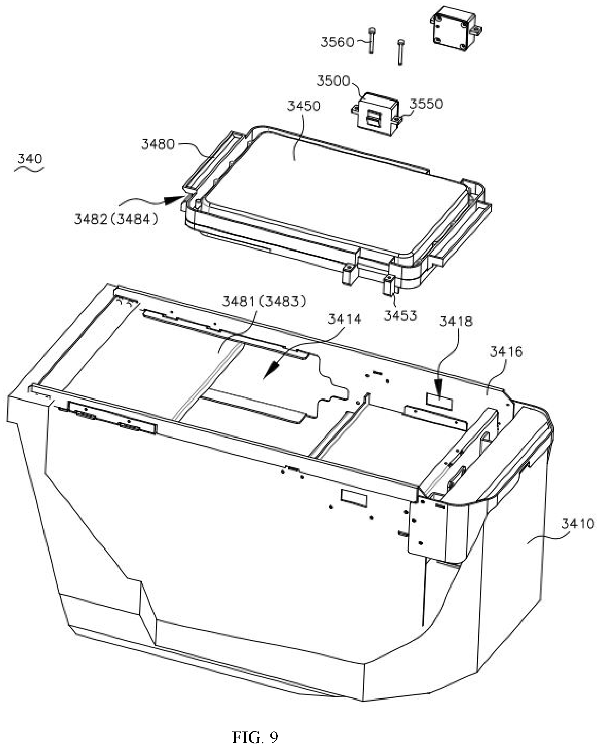

As an implementation, referring to FIG. 9, the limiting mechanism 3480 may include a first limiting portion 3481 and a second limiting portion 3482. The first limiting portion 3481 and the second limiting portion 3482 are in plug-in fit to position the housing 3450. The first limiting portion 3481 is disposed at one end of the accommodating chamber 3414 and connected to the vehicle body 3410, the second limiting portion 3482 is disposed on the housing 3450, and the second limiting portion 3482 is limited at the first limiting portion 3481 to fix a mounting position of the housing 3450 relative to the vehicle body 3410. Specifically, one of the first limiting portion 3481 and the second limiting portion 3482 is a limiting boss 3483, the other one is a limiting groove 3484, and the limiting boss 3483 is inserted and embedded in the limiting groove 3484.

In the embodiment shown in FIG. 9, the first limiting portion 3481 is the limiting boss 3483, and the second limiting portion 3482 is the limiting groove 3484. Specifically, the limiting boss 3483 is approximately in a long strip shape and is located at the bottom of the vehicle body 3410 and one end of the accommodating chamber 3414, the limiting groove 3484 is disposed at one end of the housing 3450, and the limiting groove 3484 matches with the limiting boss 3483 in shape and size, so that one end of the housing 3450 is stably held. Certainly, in some other possible embodiments, the first limiting portion 3481 is the limiting groove 3484, and the second limiting portion 3482 is the limiting boss 3483, which is not specifically limited in the present application.

In the embodiment shown in FIG. 9, latching holes 3418 may be formed in two sides of an inner wall 3416 of the accommodating chamber 3414. The limiting mechanism 3480 may further include latch assemblies 3500, and the latch assemblies 3500 are fixed on two sides of the housing 3450 and elastically latched with the latching holes 3418 on the two sides of the accommodating chamber 3414. "The inner wall 3416 of the accommodating chamber 3414" here may be side walls located on two sides in a traveling direction of the vehicle body 3410. Specifically, one end of the housing 3450 may be provided with the second limiting portion 3482 above, and the two latch assemblies 3500 may be fixed on two sides of the other end of the housing 3450 respectively.

Therefore, in this embodiment, when the charging module 3440 needs to be mounted on the vehicle body 3410, one end of the charging module 3440 is positioned first by plug-in fit of the first limiting portion 3481 and the second limiting portion 3482. Afterwards, locking of the other end of the charging module 3440 and the vehicle body 3410 is achieved by latching fit of the latch assemblies 3500 and the latching holes 3418, rapid mounting of the other end of the charging module and the vehicle body is completed, and the mounting efficiency of the charging module 3440 is improved. When the charging module 3440 needs to be detached from the vehicle body 3410, unlocking can be done by pressing the latch assemblies 3500 on the two sides at the same time, which facilitates subsequent detaching, checking and repairing of the charging module 3440. Compared to a traditional locking method using a plurality of screws, in this embodiment, the charging module 3440 adopts the latch assemblies 3500 for fixing, which can decrease mounting and detaching steps, improve the detaching and mounting efficiency of the charging module 3440, avoid screw loosening occurring due to vibration of the vehicle body 3410 in the walking process of the working robot 30, and enhance the connection stability of the charging module 3440.

Here, a specific structure of the latch assemblies 3500 as well as a connection method for the latch assemblies 3500 and the housing 3450 are illustrated.

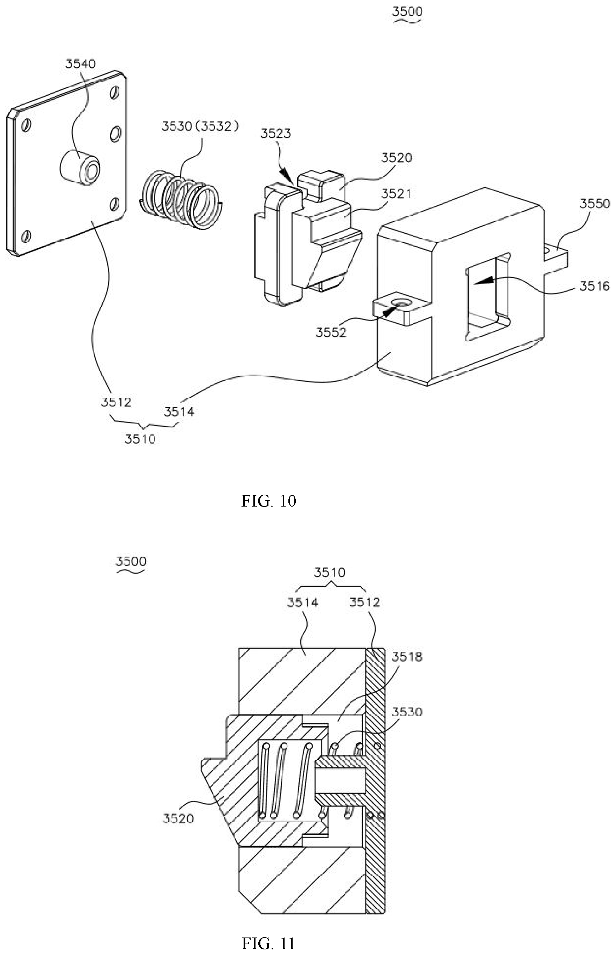

Referring to FIG. 10 and FIG. 11, each latch assembly 3500 may include a shell 3510, a bolt 3520 and an elastic member 3530. The shells 3510 are mounted on an outer side of the housing 3450, the bolts 3520 are slidably mounted in the shells 3510 and capable of protruding and extending relative to the shells 3510 so as to be latched with the latching holes 3418, and the elastic members 3530 are disposed between the shells 3510 and the bolts 3520. Since the elastic members 3530 in this embodiment abut against the positions between the shells 3510 and the bolts 3520, the bolts 3520 can move in a deformation direction of the elastic members 3530 to achieve latching with the latching holes 3418.

Specifically, each shell 3510 may include a base 3512 and a hood 3514, wherein the hood 3514 is connected to the housing 3450 and fixedly connected to the base 3512 to form a cavity for accommodating the bolts 3520 and the elastic members 3530. For example, the hoods 3514 and the bases 3512 may be buckled with each other to form the above cavities. The hoods 3514 are provided with through holes 3516 which penetrate through two opposite sides of the hoods 3514. The bolts 3520 are provided with latching portions 3521, and the latching portions 3521 can penetrate through the through holes 3516 and movably protrude and extend outside the shells 3510 and are latched with the latching holes 3418.

In the process of pressing the charging module 3440 into the vehicle body 3410, the bolts 3520 of the latch assemblies 3500 are in a compressed state, and when the bolts 3520 reach the positions of the latching holes 3418, the bolts 3520 pop up under the action of the elastic members 3530 and are latched with the latching holes 3418, so that the charging module 3440 and the vehicle body 3410 are locked together. During detaching, the bolts 3520 of the latch assemblies 3500 on the two sides of the vehicle body 3410 are pressed at the same time to stress and compress the elastic members 3530, and the bolts 3520 are removed from the latching holes 3418, so that the latch assemblies 3500 and the latching holes 3418 are separated; and then the charging module 3440 is lifted to complete detaching.

In some possible embodiments, the elastic members 3530 may be springs 3532, and each latch assembly 3500 further includes a guide pillar 3540 disposed in the corresponding shell 3510, wherein the guide pillar 3540 may be disposed on one side of the corresponding base 3512 facing the corresponding hood 3514 and fixedly connected to the base 3512. For example, each guide pillar 3540 and the corresponding base 3512 may be of an integrally formed structure. Part of the structure of the springs 3532 sleeves peripheries of the guide pillars 3540. The guide pillars 3540 may play a limiting role for the springs 3532, and may also prevent bending of the springs 3532, so that the service life of the springs 3532 is extended.

In some possible embodiments, one of each shell 3510 and the corresponding bolt 3520 is provided with a guide platform 3518, the other one is provided with a guide groove 3523, and the guide platforms 3518 and the guide grooves 3523 are in movable embedding-fit, so that the sliding stability and sliding precision of the bolts 3520 in the shells 3510 can be improved. In the embodiment shown in FIG. 10, the guide grooves 3523 are formed in the bolts 3520, the guide platforms 3518 are disposed on the hoods 3514, and there may be many guide grooves 3523 and guide platforms 3518 to better limit a moving direction of the bolts 3520.

Referring to FIG. 9 again, the charging module 3440 may further include a fixing platform 3453 disposed on the housing 3450, each latch assembly 3500 further includes a lug 3550 disposed on the corresponding shell 3510, and the shells 3510 are connected to the fixing platform 3453 through the lugs 3550. Specifically, each latch assembly 3500 may include two lugs 3550 which are located on two opposite sides of a body of the corresponding hood 3514 respectively. One side of the housing 3450 may be connected with two fixing platforms 3453 in one-to-one correspondence to the two lugs 3550, wherein at least part of structures of the two fixing platforms 3453 and the housing 3450 may be of an integrally formed structure, and the two lugs 3550 and the bodies of the hoods 3514 may be of integrally formed structures.

As an implementation, the lugs 3550 are latched or bonded to the corresponding fixing platforms 3453. As another implementation, each latch assembly 3500 may further include a fastening member 3560, and the lugs 3550 are connected to the fixing platforms 3453 through the fastening members 3560. For example, the lugs 3550 are provided with penetrating holes 3552, and the fastening members 3560 penetrate through the penetrating holes 3552 and then are connected to the fixing platforms 3453. Specifically, the fastening members 3560 may be pins or screws.

The embodiments provide the self-propelled device 340, the working robot 30, and the charging system 10. The self-propelled device 340 is applicable to being charged via the charging pile 20, and the self-propelled device 340 may include the vehicle body 3410, the mobility mechanism 3420, the storage battery 3430, and the charging module 3440. The mobility mechanism 3420 is disposed at the bottom of the vehicle body 3410 and configured to drive the vehicle body 3410 to conduct the moving operation. The storage battery 3430 is mounted on the vehicle body 3410. The charging module 3440 is configured to be coupled to the charging pile 20 so as to receive the electric energy of the charging pile 20 to charge the storage battery 3430, and the charging module 3440 is disposed at the bottom of the vehicle body 3410.

Since the charging module 3440 is disposed at the bottom of the vehicle body 3410, when the working robot 30 is parked on the base plate 210 of the charging pile 20 for charging, the power module 230 is located under the charging module 3440. Thus, the present application adopts the bottom-to-top charging structure of the power module 230 and the charging module 3440, and the entire vehicle body 3410 may play a shielding role for the charging module 3440 disposed at the bottom of the vehicle body 3410. When the working robot 30 works outdoors on a snowy day, the vehicle body 3410 can prevent snow from falling to the surface of the charging module 3440, so that the problem of difficult charging caused by snow accumulation or agglomeration on the surface of the charging module 3440 is solved, which ensures that the working robot 30 can finish a charging task smoothly.

In the specification of the present application, certain terms are used in the specification and claims to refer to specific assemblies. Those skilled in the art should understand that hardware manufacturers may refer to the same assembly by different names. The specification and claims do not distinguish assemblies based on differences in names, but based on differences in their functions. The term "comprise", as used throughout the specification and claims, is an open-ended term and shall be construed as "including but not limited to". The term "approximately" means that those skilled in the art can solve the technical problem within a certain range of errors and basically achieve the technical effect.

In the descriptions of the present application, it needs to be understood that directional or positional relationships indicated by the terms "upper", "lower", "front", "back", "left, "right", "inner" and the like are based on the directional or positional relationships shown in the accompanying drawings, and are only for the convenience of describing the present application and simplifying the description, rather than indicating or implying that the apparatus or element must have a specific orientation and be constructed and operated in a specific orientation, thus cannot be understood as a limitation of the present application.

In the present application, unless otherwise expressly specified or defined, the terms "mounted", "connected", "coupled", "fixed" and the like shall be construed broadly. For example, it may be a fixed connection, a detachable connection, or an integrated connection; it may be a mechanical connection or an electrical connection; and it may be a direct connection, or an indirect connection via an intermediate medium, and it may also be the internal communication between two elements, or merely surface contact. To those of ordinarily skill in the art, the specific meanings of the above terms in the present application may be understood according to specific circumstances.

In the descriptions of the specification, descriptions with reference to the terms "one embodiment", "some embodiments", "examples", "specific examples", or "some examples" means that specific features, structures, materials, or characteristics described in conjunction with the embodiments or examples are included in at least one embodiment or example of the present application. In the specification, the schematic expressions of the above terms do not necessarily refer to the same embodiments or examples. Moreover, the specific features, structures, materials, or characteristics described may be combined in any one or more embodiments or examples in an appropriate manner. In addition, those skilled in the art may combine the different embodiments or examples described in the specification, as well as the features of the different embodiments or examples, without conflicting with each other.

In addition, the terms "first" and "second" are only for descriptive purposes and cannot be understood as indicating or implying relative importance or implicitly specifying the quantity of technical features indicated. Therefore, features that are defined by "first" and "second" can explicitly or implicitly include at least one of these features. In the descriptions of the present application, the meaning of "a plurality of" is at least two, such as two and three, unless otherwise explicitly and specifically defined.

Finally, it should be noted that: the above embodiments are only used to illustrate the technical solutions of the present application, not to limit it; although the present application has been described in detail with reference to the above embodiments, those ordinarily skilled in the art should understand that: they can still modify the technical solutions recorded in the above embodiments or make equivalent replacement for part of the technical features; and these modifications or replacements do not separate the essence of the corresponding technical solutions from the spirit and scope of the technical solutions of the embodiments of the present application.

## Claims

1. A self-propelled device, **characterized in that** the self-propelled device is applicable to being charged via a charging pile, and the self-propelled device comprises:
a vehicle body;
a mobility mechanism, disposed at a bottom of the vehicle body and configured to drive the vehicle body to conduct a moving operation;
a storage battery, mounted on the vehicle body; and
a charging module, configured to be coupled to the charging pile so as to receive electric energy of the charging pile to charge the storage battery, wherein the charging module is disposed at the bottom of the vehicle body.

2. The self-propelled device according to claim 1, **characterized in that** the charging pile comprises a transmitting coil; and the charging module comprises a housing and a receiving coil, the housing is mounted at the bottom of the vehicle body, the receiving coil is configured to be coupled to the transmitting coil, and the receiving coil is disposed in the housing and electrically connected to the storage battery.

3. The self-propelled device according to claim 2, **characterized in that** the housing is fixedly connected to the bottom of the vehicle body; and the housing is provided with a charging surface corresponding to the transmitting coil, and the charging surface protrudes relative to a bottom surface of the vehicle body.

4. The self-propelled device according to claim 2, **characterized in that** the self-propelled device further comprises an actuator;
an accommodating chamber is disposed at the bottom of the vehicle body, and the actuator and the housing are disposed in the accommodating chamber; and the actuator is in transmission connection with the housing and is configured to drive the housing to move in the accommodating chamber so as to achieve switching between an extending position and a retracting position;
the housing is provided with a charging surface corresponding to the transmitting coil; when the charging module is located at the extending position, the charging surface protrudes relative to a bottom surface of the vehicle body; and when the charging module is located at the retracting position, the charging surface is concealed in the accommodating chamber.

5. The self-propelled device according to claim 2, **characterized in that** an accommodating chamber is disposed at the bottom of the vehicle body, and the housing is detachably disposed in the accommodating chamber.

6. The self-propelled device according to claim 5, **characterized in that** the self-propelled device further comprises a limiting mechanism, and the limiting mechanism is connected between the housing and the vehicle body such that the housing is detachably connected to the vehicle body.

7. The self-propelled device according to claim 6, **characterized in that** the limiting mechanism comprises a first limiting portion and a second limiting portion, the first limiting portion is disposed at one end of the accommodating chamber and connected to the vehicle body, the second limiting portion is disposed on the housing, and the second limiting portion is limited at the first limiting portion to fix a mounting position of the housing relative to the vehicle body.

8. The self-propelled device according to claim 7, **characterized in that** one of the first limiting portion and the second limiting portion is a limiting boss, the other one is a limiting groove, and the limiting boss is inserted and embedded in the limiting groove.

9. The self-propelled device according to any one of claims 6 to 8, **characterized in that** latching holes are formed in two sides of an inner wall of the accommodating chamber; and
the limiting mechanism further comprises latch assemblies, and the latch assemblies are fixed on two sides of the housing and elastically latched with the latching holes on the two sides of the accommodating chamber.

10. The self-propelled device according to claim 9, **characterized in that** each latch assembly comprises a shell, a bolt and an elastic member, the shells are mounted on an outer side of the housing, the bolts are slidably mounted in the shells and capable of protruding and extending relative to the shells so as to be latched with the latching holes, and the elastic members are disposed between the shells and the bolts.

11. The self-propelled device according to claim 10, **characterized in that** each shell comprises a base and a hood, the hoods are connected to the housing, the hoods are fixedly connected to the bases, the hoods are provided with through holes, and the bolts are provided with latching portions capable of penetrating through the through holes; and the latching portions movably protrude and extend outside the shells and are latched with the latching holes.

12. The self-propelled device according to claim 10 or 11, **characterized in that** the elastic members are springs, each latch assembly further comprises a guide pillar disposed in the corresponding shell, and the springs sleeve the guide pillars.

13. The self-propelled device according to any one of claims 10 to 12, **characterized in that** one of each shell and the corresponding bolt is provided with a guide platform, the other one is provided with a guide groove, and the guide platforms and the guide grooves are in movable embedding-fit.

14. The self-propelled device according to any one of claims 10 to 13, **characterized in that** the charging module further comprises a fixing platform disposed on the housing, each latch assembly further comprises a lug disposed on the corresponding shell, and the shells are connected to the fixing platform through the lugs.

15. The self-propelled device according to claim 14, **characterized in that** the lugs are latched or bonded to the fixing platform, or
each latch assembly further comprises a fastening member, and the lugs are connected to the fixing platform through the fastening members.

16. The self-propelled device according to any one of claims 2 to 15, **characterized in that** the housing comprises an upper housing and a lower housing connected with each other, one of the upper housing and the lower housing comprises a plastic material, and the other one comprises a metal material.

17. The self-propelled device according to claim 16, **characterized in that** the housing further comprises a sealing member, and the upper housing and the lower housing are sealed through the sealing member.

18. The self-propelled device according to any one of claims 2 to 17, **characterized in that** the charging module further comprises a coil positioning sensor, and the coil positioning sensor is disposed in the housing and configured to detect a position of the charging module relative to the charging pile.

19. The self-propelled device according to claim 18, **characterized in that** the charging pile further comprises a marking coil, the coil positioning sensor comprises a pair of inductors, and the pair of inductors is configured to detect a magnetic field intensity of the marking coil so as to determine the position of the charging module relative to the charging pile.

20. The self-propelled device according to claim 18 or 19, **characterized in that** the self-propelled device further comprises a control module, the control module is electrically connected to the coil positioning sensor, and the control module is configured to acquire an electromagnetic wave received by the coil positioning sensor, process the received electromagnetic wave to obtain electromagnetic wave intensity distribution information, and determine the position of the charging module relative to the charging pile according to the electromagnetic wave intensity distribution information.

21. The self-propelled device according to any one of claims 1 to 20, **characterized in that** the mobility mechanism is disposed at the bottom of the vehicle body and supports the vehicle body to enable the bottom of the vehicle body to be spaced from a platform surface in a walking scenario, and the charging module is exposed at the bottom of the vehicle body.

22. The self-propelled device according to claim 21, **characterized in that** the mobility mechanism comprises two crawler belts, the two crawler belts are located on left and right sides in a traveling direction of the vehicle body, and the charging module is exposed in a space between the two crawler belts.

23. The self-propelled device according to claim 22, **characterized in that** the self-propelled device further comprises a baffle mechanism, the baffle mechanism comprises two baffles, and the two baffles are disposed on side faces of the two crawler belts respectively and shield the space between the two crawler belts.

24. A working robot, **characterized by** comprising:
a working apparatus; and
the self-propelled device according to any one of claims 1 to 23, wherein the working apparatus is connected to a vehicle body of the self-propelled device.

25. The working robot according to claim 24, **characterized in that** the working apparatus comprises at least one of a snow removing mechanism, a snow rolling mechanism, a snow throwing mechanism, a weeding mechanism, a mowing mechanism, a leaf blowing mechanism, a salt spreading mechanism, a roller brush mechanism and a snow pushing mechanism.

26. A charging system, **characterized by** comprising:
the working robot according to claim 24 or 25; and
a charging pile, wherein the charging pile comprises a base plate and a power module, and the power module is disposed on the base plate and adapts to a charging module of the working robot; and
the base plate is configured for parking of the working robot, and when the working robot is parked on the base plate for charging, the power module is located under the charging module.
